Europäisches Patentamt

European Patent Office

Office européen des brevets

(19)

(11) Veröffentlichungsnummer: **0 057 161**
**B1**

(12) **EUROPÄISCHE PATENTSCHRIFT**

(45) Veröffentlichungstag der Patentschrift:
**23.04.86**

(21) Anmeldenummer: **82810025.5**

(22) Anmeldetag: **21.01.82**

(51) Int. Cl.⁴: **C 08 L 67/00**

(54) **Thermoplastische Polyesterformmasse und deren Verwendung.**

(30) Priorität: **27.01.81 CH 512/81**

(43) Veröffentlichungstag der Anmeldung:
**04.08.82 Patentblatt 82/31**

(45) Bekanntmachung des Hinweises auf die Patenterteilung:
**23.04.86 Patentblatt 86/17**

(84) Benannte Vertragsstaaten:
**CH DE FR GB IT LI NL**

(56) Entgegenhaltungen:
**FR - A - 2 125 117**
**FR - A - 2 442 260**

**Die Akte enthält technische Angaben, die nach dem
Eingang der Anmeldung eingereicht wurden und die
nicht in dieser Patentschrift enthalten sind.**

(73) Patentinhaber: **CIBA-GEIGY AG, Klybeckstrasse 141,
CH-4002 Basel (CH)**

(72) Erfinder: **Breitenfellner, Franz, Dr., Im Entich 9a,
D-6140 Bensheim 1 (DE)**

## Beschreibung

Die vorliegende Erfindung betrifft eine von Flammhemmern freie thermoplastische Polyesterformmasse, die Dolomit und gegebenenfalls verstärkende Füllstoffe, sowie übliche Zusätze enthält und deren Verwendung zur Herstellung geformter Gegenstände.

Thermoplastische Polyester sind wertvolle Formmassen, die eine breite Anwendung in der Technik gefunden haben. Um verschiedenen Anwendungszwecken zu genügen, ist es üblich, den Polyestern Füllstoffe zuzugeben, mit denen bestimmte mechanische und elektrische Eigenschaften verbessert werden können.

Zur Erhöhung der Wärmeformbeständigkeit und Steifigkeit können verstärkende Füllstoffe wie z.B. Glasfasern zugegeben werden und zur Verminderung der Brennbarkeit werden flammhemmende Mittel einverleibt. Mit diesen Zusätzen wird jedoch die Kriechstromfestigkeit vermindert, einer bei Anwendungen im Elektrobereich wichtigen Eigenschaft.

Es sind bereits Füllstoffe zur Verbesserung der Kriechstromfestigkeit bekannt, z.B. Kaolin (DE-OS 2 616 754), Calcium- oder Bariumsulfat (DE-OS 2 524 121) und Metallborate (DE-OS 2 534 762). Nachteilig bei diesen Füllstoffen ist eine mögliche Verminderung der Eigenfarbe, die die Farbgebung mit Pigmenten erschweren kann.

Die japanische Offenlegungsschrift 54–124 053 (1979) beschreibt flammgehemmte Polyesterformmassen mit verbesserter Stossfestigkeit und elektrischen Eigenschaften, die Fluorit, Litopon oder Dolomit als Füllstoffe enthalten.

Aufgabe vorliegender Erfindung ist es, thermoplastische Polyesterformmassen bereitzustellen, die eine verbesserte Steifigkeit und Wärmeformbeständigkeit aufweisen, mit dieser Eigenschaftsverbesserung verstärkende Füllstoffe ganz oder teilweise zu ersetzen vermögen, und hierbei die Kriechstromfestigkeit zu verbessern. Insgesamt soll auch eine helle Eigenfarbe erzielt werden.

Gegenstand vorliegender Erfindung ist eine von Flammhemmern freie Formmasse auf der Basis von thermoplastischen Polyestern, die, bezogen auf die Gesamtmasse,

a) 40 bis 99 Gew.-% eines Polyalkylenterephthalats,

b) 1 bis 60 Gew.-% feinteiliges Dolomit und

c) gegebenenfalls weitere übliche Zusätze enthält.

Für die erfindungsgemässen Formmassen geeignete lineare thermoplastische Polyester sind bevorzugt kristallin bzw. teilkristallin und weisen in diesem Fall insbesondere Schmelzpunkte von mindestens 150°C auf. Sie können jedoch auch in amorpher Form vorliegen, wobei dann der Polyester bevorzugt eine Glasumwandlungstemperatur von mindestens 70°C, besonders mindestens 100°C aufweist. Die Intrinsic Viskosität der Polyester beträgt bevorzugt mindestens 0,6 dl/g, insbesondere mindestens 0,8 dl/g.

Bei den Polyestern kann es sich um Homo- oder Mischpolyester handeln, die aus Terephthalsäure und aliphatischen Diolen aufgebaut sind. Ferner sind auch Mischungen dieser Polyester geeignet. Ihre Zusammensetzung richtet sich im wesentlichen nach den gewünschten Eigenschaften für einen bestimmten Verwendungszweck.

Bei Polyestern aus mindestens 3 Monomeren können diese statistisch verteilt sein oder es kann sich um Blockpolymere handeln.

Geeignete aliphatische Diole sind die linearen und verzweigten aliphatischen Glykole, besonders die mit 2 bis 12, insbesondere 2 bis 6 Kohlenstoffatomen im Molekül, z.B.:

Äthylenglykol, 1,2- oder 1,3-Propylenglykol, 1,2-, 1,3-, 2,3- oder 1,4-Butandiol, Pentylglykol, Neopentylglykol, 1,6-Hexandiol, 1,12-Dodecandiol. Die Alkylendiole enthalten insbesondere 2 bis 4 Kohlenstoffatome.

Bevorzugte Diole sind Äthylenglykol und 1,4-Butandiol.

Bevorzugt sind erfindungsgemässe Formmassen, in denen Polyester aus mindestens 30 Mol-%, bevorzugt mindestens 40 Mol-% Terephthalsäure und zu mindestens 20 Mol-%, vorzugsweise mindestens 40 Mol-% aus Alkylendiolen mit bevorzugt 2 bis 12 C-Atomen aufgebaut ist, bezogen auf den Polyester. Besonders bevorzugt sind als Polyester Polyäthylen- und Poly-1,4-butylenterephthalat sowie Copolyester auf der Basis von Polyäthylen- und Poly-1,4-butylenterephthalat.

Die erfindungsgemässe Formmasse kann zusätzlich einen verstärkenden (faserförmigen) Füllstoff enthalten, z.B. Asbestfasern, Kohlenstofffasern oder insbesondere Glasfasern. Die Gesamtmenge an verstärkendem Füllstoff und Dolomit beträgt bevorzugt höchstens 60 Gew.-%, bezogen auf die Gesamtmasse. Die Füllstoffe einschliesslich Dolomit können mit einem Haftvermittler beschichtet sein, um deren Bindung an den Polyester zu verbessern.

In einer bevorzugten Ausführungsform der Erfindung enthält die Formmasse 20 bis 40 Gew.-% Dolomit oder 15 bis 30 Gew.-% Dolomit und 15 bis 20 Gew.-% Glasfasern.

Bei dem erfindungsgemäss verwendeten Dolomit handelt es sich hauptsächlich um feingemahlenen natürlichen Dolomit, der eine Teilchengrösse von 1 µm bis 100 µm aufweisen kann.

Die thermoplastischen Polyester sind bekannt und handelsüblich oder sie können nach bekannten Polykondensationsverfahren der Technik hergestellt werden.

Die Herstellung der erfindungsgemässen Formmassen erfolgt ebenfalls nach in der Technik üblichen Methoden durch Einarbeiten der Zusätze in den thermoplastischen Polyester während oder nach der Polykondensation durch Zugabe zu der Reaktionsmasse bzw. durch Umgranulieren.

Es können auch weitere übliche Zusätze zugegeben werden, z.B. weitere Füllstoffe wie Talk, Glimmer, Metallpulver, Kieselsäureaerosol oder Glaskugeln, anorganische und organische Pigmente, optische Aufheller, Mattierungsmittel, Gleitmittel, Entformungshilfsmittel, kristallisationsfördernde Mittel, Antioxidantien, Lichtschutzmittel und Verarbeitungsstabilisatoren.

Die erfindungsgemässen Formmassen haben eine helle Eigenfarbe, wodurch die Farbgebung mit Pigmenten erleichtert wird. Sie weisen eine erhöhte Wärmeformbeständigkeit und Steifigkeit auf. Bei mit einem Verstärkerfüllstoff versehenen Formmassen ist die Kriechstromfestigkeit stark verbessert. Ferner weisen die Formmassen ausgezeichnete Zähigkeitseigenschaften auf.

Die Formmassen können nach gebräuchlichen Formgebungsverfahren wie Giessen, Pressen, Spitzgiessen und Extrudieren zu Gebrauchsgegenständen aller Art verarbeitet werden. Beispiel für solche Gegenstände sind technische Apparateteile, Apparategehäuse, Haushaltgeräte, Sportgeräte, Elektroisolationen, Automobilteile, Schaltungen, Platten, Filme und Halbzeuge, die spanabhebend verformt werden können. Ein besonderes Anwendungsgebiet ist auf Grund der guten elektrischen Eigenschaften die Herstellung von Formkörpern für den Elektrobereich.

Die folgenden Beispiele erläutern die Erfindung näher.

Beispiele 1 bis 6

Mit Hilfe eines Labor-Kokneters werden in Polybutylenterephthalat bei einer Zylindertemperatur von 250 °C die in der beiliegenden Tabelle 1 angeführten Menge an Dolomit eingearbeitet und die Formmasse granuliert. Das verwendete Polybutylenterephthalat hat nach DIN 53 728/3 eine Viskositätszahl von 147 cm³/g. Die mittlere Teilchengrösse des Dolomites beträg etwa 5μm.

Nach dem Trocknen der Granulate erfolgt ihre Verarbeitung zu Probekörpern und zwar unter folgenden Bedingungen: Zylindertemperaturen 250 °C, Werkzeugtemperatur 80 °C, Zykluszeit 45 sec. An den Formkörpern werden die in Tabelle 1 angeführten Eigenschaften ermittelt.

In gleicher Weise werden Formkörper aus reinem Polybutylenterephthalat sowie aus einem glasfaserverstärkten Polybutylenterephthalat (30 Gew.-% Glasfasern hergestellt) und die Eigenschaften vergleichsweise ermittelt (Beispiele 5 und 6).

Man erkennt aus Tabelle 1, dass sich die erfindungsgemässen Formmassen durch bessere Steifigkeits- und Wärmeformbeständigkeitswerte sowie durch eine niedrige Wärmedehnung im Vergleich zu unverstärktem Polybutylenterephthalat auszeichnen. Gegenüber glasfaserverstärkten Formkörpern weisen die erfindungsgemässen Formkörper eine verbesserte Kriechstromfestigkeit nach DIN 53 480 Verfahren KC auf.

Tabelle 1

| Beispiel Nr. | Zusammensetzung | E-Modul DIN 53 457 23°C (N/mm²) | Wärmeformbeständigkeit ISO/R 75 Verf. B (C°) | Ausdehnungskoeffizient (Bereich –30°C bis +30°C) (K¹) | Kriechstromfestigkeit DIN 53 480 Verf. KC |
|---|---|---|---|---|---|
| 1 | 85 Gew.-% PBTP 15 Gew.-% Dolomit | 3300 | 187 | $6,0 \cdot 10^{-5}$ | > 600 |
| 4 | 70 Gew.-% PBTP 30 Gew.-% Dolomit | 4300 | 191 | $5,3 \cdot 10^{-5}$ | |
| 3 | 55 Gew.-% PBTP 45 Gew.-% Dolomit | 5800 | 196 | $4,5 \cdot 10^{-5}$ | |
| 4 | 40 Gew.-% PBTP 60 Gew.-% Dolomit | 8100 | 201 | $3,3 \cdot 10^{-5}$ | > 600 |
| 5 | 100 Gew.-% PBTP | 2700 | 160 | $8,0 \cdot 10^{-5}$ | > 600 |
| 6 | 70 Gew.-% PBTP 30 Gew.-% Glasfasern | 9000 | 220 | $3,0 \cdot 10^{-5}$ | 425 |

Beispiele 7 und 8:

Mit Hilfe eines Labor-Kokneters werden bei einer Zylindertemperatur von 270 °C in 80 Gew.-% Polyäthylenterephthalat (PETP) 20 Gew.-% Dolomit eingearbeitet. Das verwendete PETP hat eine Viskositätszahl von 140 cm³/g (Beispiel 7).

Die Verarbeitung zu Formkörpern erfolgt unter folgenden Bedingungen: Zylindertemperatur 270 °C, Werkzeugtemperatur 140 °C, Zykluszeit 60 sec.

In analoger Weise werden PETP-Formkörper hergestellt, die kein Dolomit enthalten und die Eigenschaften ermittelt (Beispiel 8).

Aus Tabelle 2 ist ersichtlich, dass das E-Modul, die Wärmeformbeständigkeit und Kriechstromfestigkeit verbessert ist.

Tabelle 2

| Beispiel Nr. | Zusammensetzung | E-Modul DIN 53457 (N/mm²) 23°C | Wärmeform- beständigkeit ISO/R 75 Verf. B (°C) | Kriechstrom- festigkeit DIN 53480 Verf. KG |
|---|---|---|---|---|
| 7 | 80 Gew.-% PETP 20 Gew.-% Dolomit | 4100 | 180 | 350 |
| 8 | 100 Gew.-% PETP | 3000 | 170 | 300 |

**Patentansprüche**

1. Von Flammhemmern freie Formmasse auf der Basis von thermoplastischen Polyestern, die, bezogen auf die Gesamtmasse
a) 40 bis 99 Gew.-% eines Polyalkylenterephthalats,
b) 1 bis 60 Gew.-% Dolomit und
c) gegebenenfalls weitere übliche Zusätze enthält.

2. Formmasse gemäss Anspruch 2, dadurch gekennzeichnet, dass der Polyester ein Polyäthylen- oder Poly-1,4-butylenterephthalat oder ein Copolyester auf der Basis Polyäthylen- oder Poly-1,4-butylenterephthalat ist.

3. Formmasse gemäss Anspruch 1, dadurch gekennzeichnet, dass sie zusätzlich einen verstärkenden Füllstoff enthält, wobei die Menge an verstärkendem Füllstoff und Dolomit höchstens 60 Gew.-% beträgt, bezogen auf die Gesamtmasse.

4. Formmasse gemäss Anspruch 3, dadurch gekennzeichnet, dass es sich bei dem verstärkenden Füllstoff um Glasfasern handelt.

5. Formmasse gemäss Anspruch 1, dadurch gekennzeichnet, dass sie 20 bis 40 Gew.-% Dolomit enthält.

6. Formmasse gemäss Anspruch 3, dadurch gekennzeichnet, dass sie 15 bis 30 Gew.-% Dolomit und 15 bis 20 Gew.-% Glasfasern enthält.

7. Verwendung der Formmasse gemäss Anspruch 1 zur Herstellung von geformten Gegenständen.

**Claims**

1. A moulding composition which does not contain flame retardants and which is based on thermoplastic polyesters, said composition comprising, based on the total composition,
a) 40 to 99% by weight of polyalkylene terephthalate,
b) 1 to 60% by weight of dolomite, and
c) optionally further conventional additives.

2. A moulding composition according to claim 1, wherein the polyester is a polyethylene terephthalate or poly-1,4-butylene terephthalate or a copolyester based on polyethylene terephthalate or poly-1,4-butylene terephthalate.

3. A moulding composition according to claim 1, which additionally contains a reinforcing filler, such that the amount of filler and dolomite is at most 60% by weight, based on the total composition.

4. A moulding composition according to claim 3, wherein the reinforcing filler consists of glass fibres.

5. A moulding composition according to claim 1, which contains 20 to 40% by weight of dolomite.

6. A moulding composition according to claim 3, which contains 15 to 30% by weight of dolomite and 15 to 20% by weight of glass fibres.

7. Use of a moulding composition according to claim 1 for the manufacture of moulded articles.

**Revendications**

1. Matière à mouler à base de polyesters thermoplastiques, sans agents d'ignifugeage, comprenant, par rapport à la masse totale:
a) 40 à 99% en poids d'un téréphtalate de po-lyalkylène,
b) 1 à 60% en poids de dolomite et
c) le cas échéant d'autres additifs courants.

2. Matière à mouler selon la revendication 1, caractérisée en ce que le polyester est un téréphtalate de polyéthylène ou de poly-1,4-butylène ou un copolyester de ces téréphtalates.

3. Matière à mouler selon la revendication 1, caractérisée en ce qu'elle contient en outre une charge de renforcement, la proportion totale de cette charge et de dolomite étant au plus de 60% du poids de la masse totale.

4. Matière à mouler selon la revendication 3, caractérisée en ce que la charge renforçante est constituée par des fibres de verre.

5. Matière à mouler selon la revendication 1, caractérisée en ce qu'elle contient 20 à 40% en poids de dolomite.

6. Matière à mouler selon la revendication 3, caractérisée en ce qu'elle contient 15 à 30% en poids de dolomite et 15 à 20% en poids de fibres de verre.

7. Utilisation de matières à mouler selon la revendication 1 pour la fabrication d'objets mou-lés.